# EUROPEAN PATENT APPLICATION

(11) **EP 0 945 161 A1**
(43) Date of publication of application: **29.09.1999**
(21) Application number: 99301989.2
(22) Date of filing: 16.03.1999
(51) Int. Cl.: B01D 53/047, F25J 3/04

(54) **Separating nitrogen from air**

(30) Priority: 17.03.1998 US 40095
(71) Applicant: THE BOC GROUP, INC., Murray Hill, New Providence, New Jersey 07974-2082 (US)
(72) Inventor: Brooks, Charles M., North Plainfield, New Jersey 07060 (US); Toppel, Karl O., Flemington, New Jersey 08822 (US)
(74) Representative: Wickham, Michael

(57) **Abstract**

A method of separating air in a liquid nitrogen assist plant in which an oxygen-enriched waste stream produced by the plant is used partially to pressurise adsorbent beds in a pre-purification unit (18) operating in accordance with a pressure swing adsorption cycle. Accordingly, the purification unit has a manifold (42) able to be placed in communication with an oxygen-enriched waste stream ("waste nitrogen") by opening the valve (70).

## Description

The present invention relates to a method of and a plant for separating nitrogen from air.

In one well known kind of air separation method compressed and purified air is distilled or rectified in a single rectification column and an extemal source of liquid nitrogen (or liquid air) is used to provide refrigeration for the plant. Such a plant is sometimes referred to in the art as a "liquid assist plant". The purification of the air is performed so as to remove carbon dioxide and moisture. If high purity products are required, it is sometimes desirable to remove other impurities such as carbon monoxide and hydrocarbons upstream of the rectification column.

Modern air separation plants use pre-purification units employing adsorbent beds to adsorb particularly water vapour and carbon dioxide from the incoming air. In order that the plant can be continuously be operated, the adsorbent beds are utilised in continuous cycles in which one adsorbent bed functions on-line to adsorb the impurities from the air with one or more other off-line adsorbent beds are being regenerated. One known cycle is referred to in the art as a pressure swing adsorption cycle because the beds adsorb at an operating pressure, typically set by the main air compressor, and are regenerated at a lower pressure at which the adsorbed impurities are desorbed and are discharged from the pre-purification unit.

Typically the regeneration in a pressure swing adsorption cycle is effected by first venting an adsorbent bed to atmosphere so that the adsorbed impurities desorb from the bed and flow towards the feed end of the bed. Thereafter, the adsorbent bed is purged with a stream of nitrogen further to desorb the impurities and to discharge them from the bed. The adsorbent bed is repressurised with part of the compressed air. This use of the compressed air to be rectified not only represents an increase in the required capacity of the compressor but also an additional energy expenditure beyond that required for the distillation itself.

The present invention provides a method of and plant for separating nitrogen from air in which a liquid- assist plant is operated with a pressure swing adsorption, pre-purification unit in a more energy efficient manner and such that the capacity of the compressor relative to the rate of production of nitrogen product from the plant is able to be decreased.

In its broadest aspect, the invention provides a method of separating a nitrogen product and an oxygen-enriched "waste" gas from compressed, purified air in a liquid assist plant wherein purification of the air is performed by pressure swing adsorption and the pressure swing adsorption cycle includes a step of repressurising a bed from which the impurities have been desorbed, characterised in that part of the repressurisation is performed with a stream of the oxygen-enriched "waste" gas.

The invention also provides a liquid assist plant for separating a nitrogen product and an oxygen-enriched "waste" gas from air including a pressure swing adsorption purification unit, wherein the said unit includes a repressurisation pipeline, characterised in that the repressurisation pipeline is able in operation to be opened to a flow of the oxygen-enriched "waste" gas.

In a preferred example of the method according to the invention the air is compressed to form an air stream. After heated compression is removed from the air stream, the air stream is purified by removing impurities that comprise carbon dioxide and moisture from the air stream this produces a compressed and purified air stream. The compressed and purified air stream is introduced into a distillation column configured to separate the air to produce the nitrogen and a waste stream enriched in oxygen. Refrigeration is introduced from an external source of liquid (e.g. liquid nitrogen). The air stream is purified in pre-purification unit having at least two adsorbent beds containing an adsorbent to adsorb the impurities. The pre-purification unit is operated by subjecting each of the adsorbent beds to the steps of adsorption to adsorb the impurities from the air stream, thereby to produce a pre-purification unit product stream, and regeneration to regenerate the adsorbent and to repressurise each of the adsorbent beds to an operational pressure of the pre-purification unit. The compressed and purified air stream is formed from at least of the pre-purification unit product stream and each of the adsorbent beds is in part repressurised with the waste stream.

In the method according to the invention, the partial repressurisation (or backfill) step with the waste stream is an effective way to save power in a liquid assist plant having a pre-purification unit operating in accordance with pressure swing adsorption cycle.

In the known process discussed above, approximately four percent of the electrical energy is expended in compressing the air is utilised for bed repressurisation. Our calculations show that the present invention is able to decrease the total electrical energy expenditure by about two percent, that is to say about half the bed repressurisation energy is saved. Furthermore, since the air compressor does not have to be sized to have an additional capacity to backfill or repressurise the adsorbent beds, smaller and less expensive compressors can be used.

The method and plant according to the invention will now be described by way of example with reference to the accompanying drawings, in which:
Figure 1 is a schematic flow diagram of an air separation plant in accordance with the present invention, and
Figure 2 is a schematic of the pre-purification unit for use in the method and plant according to the present invention.

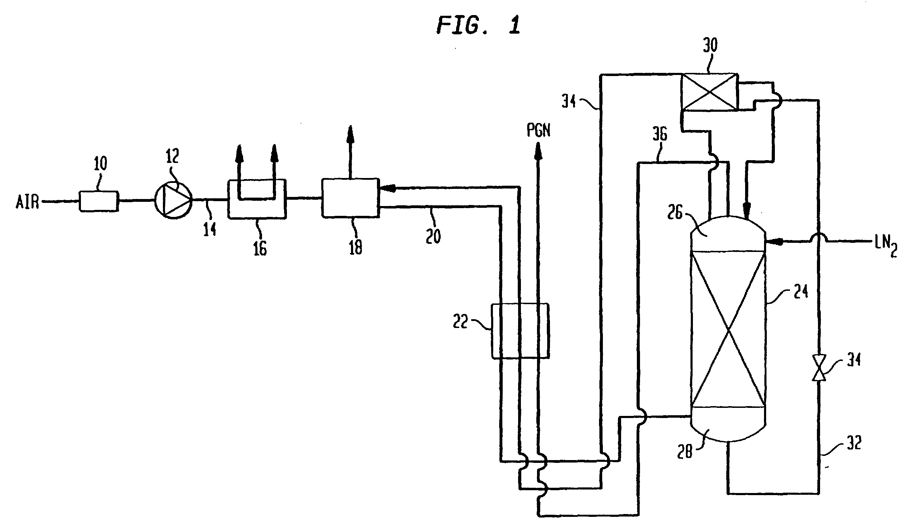

With reference to Figure 1 of the drawings, in operation of an air separation plant 1, air is filtered in a filter 10 and compressed in a compressor 12 to produce a compressed air stream 14. Heat of compression is removed in an after-cooler 16 and the air is purified in a pre-purification unit 18 effective to remove impurities, particularly carbon dioxide and moisture (water vapour) therefrom.

The resultant compressed and purified air stream 20 is cooled in a main heat exchanger 22 to a temperature suitable for its rectification. The resulting cooled air stream is introduced into a distillation (i.e. rectification) column 24 that is designed to produce a nitrogen-rich overhead fraction (typically at least 99.9% pure) in an overhead or top region 26 of the column 24 and a bottom oxygen-rich fraction in a bottom region 28 of the column 24.

A part of the nitrogen-rich overhead fraction is condensed within a head condenser 30. The resultant condensate is employed as reflux in the distillation column 24. In addition, a liquid nitrogen stream "LN₂" is introduced from an external source into the top region 26 of the column 24. This liquid nitrogen stream enhances the reflux in the column 24. The advantages of providing such a liquid stream are that it obviates the need to provide an expansion turbine to generate refrigeration for the plant and that it enables a relatively small plant to produce gaseous nitrogen product at a given rate.

The coolant for the head condenser 30 is formed by removing a stream 32 from the bottom region 28 of the column 24 and expanding it through an expansion valve 33. The coolant stream 32 vaporises in the head condenser to produce a "waste" oxygen-enriched gaseous stream 34 which is passed through the main heat exchanger 22 counter-currently to the air to be separated. The waste stream 34 is thus warmed typically to approximately ambient temperature and, as will be described below, is utilised within the pre-purification unit 18. A gaseous nitrogen product stream 36 is taken from the top region 26 of the column 24 and is fully warned (to approximately ambient temperature) within the main heat exchanger to produce a gaseous nitrogen product stream which is labelled "PGN" in Figure 1.

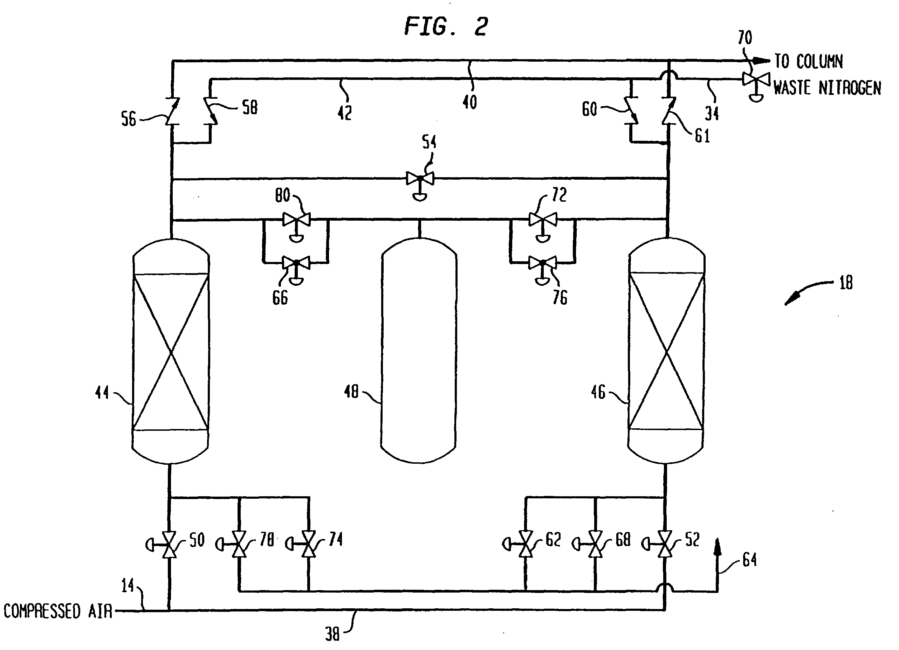

Referring now to Figure 2, the pre-purification unit 18 includes an inlet manifold 38 through which the compressed air stream enters. The purified air is discharged from a product manifold 40. The waste oxygen-enriched stream 34 is admitted to the pre-purification unit 18 through a waste stream manifold 42. In the illustrated embodiment, just two adsorbent beds 44 and 46 are provided, there being sufficient adsorbent for the size of the air separation plant. The adsorbent may, for example, consist of activated alumina. A pressure vessel 48 that does not contain any adsorbent is also provided.

The pre-purification unit 18 operates in a continuous ten step cycle as illustrated in the chart below.

| **Step No.** | **Adsorbent Bed 44** | **Adsorbent Bed 46** | **Pressure Vessel 48** | **Duration (seconds)** |
|---|---|---|---|---|
| 1 | Pressurise | Adsorption | Hold | 300 |
| 2 | Adsorption | Depressurise | Pressurise | 50 |
| 3 | Adsorption | Regeneration | Pressurise | 355 |
| 4 | Adsorption | Back-fill | Pressurise | 30 |
| 5 | Adsorption | Pressurise/Equalise | Equalise | 30 |
| 6 | Adsorption | Pressurise | Hold | 300 |
| 7 | Depressurise | Adsorption | Pressurise | 50 |
| 8 | Regeneration | Adsorption | Pressurise | 355 |
| 9 | Back-fill | Adsorption | Pressurise | 30 |
| 10 | Pressurise/Equalise | Adsorption | Equalise | 30 |

In the following description, all valves (excluding the check valves) are assumed be in a normally closed position unless stated to be open.

In step the valves 52 and 54 are in an open position. The compressed air is thus admitted to the bed 46. Impurities, particularly water vapour and carbon dioxide, are adsorbed within the adsorbent bed 46. Most of the thus purified air is discharged via a check-valve (one-way valve) 61 to the product manifold 40, but a small part of the purified air flows through the valve 54 and pressurises the bed 44. The pressure vessel 48 is isolated from the beds 44 and 46. Check-valves 56 and 58 are provided so as to prevent back flow of air into the oxygen-rich waste stream manifold 42. Check-valves 60 and 61 are provided for the same purpose when the adsorbent bed 46 is repressurised. At the conclusion of step 1, the adsorbent bed 44 is ready to be switched to adsorption and the adsorbent bed 46 is ready to be regenerated.

Accordingly, step 2 is initiated by closing valves 52 and 54 and opening valves 50, 62 and 66. The opening of the valve 62 causes gas to be vented from the adsorbent bed 46 to a vent line 64. The opening of valve 50 permits feed air to be purified to enter the adsorbent bed 44 and thereby have impurities adsorbed therefrom. The resultant purified gas flows to the product manifold 40. The opening of the valve 66 causes a small portion of the purified air to be diverted to the pressure vessel 48 and to raise the pressure therein.

To end step 2 of the cycle and commence step 3, the valve 62 is closed and the valves 68 and 70 opened. Dry oxygen-rich waste gas thus regenerates adsorbent bed 46 by driving out the previously adsorbed water vapour and carbon dioxide and discharging these gases through the vent line 64. Purified air continues to be produced by the adsorbent bed 44. Purified air continues to flow into the pressure vessel 48.

In order to end step 3 and initiate step 4 of the cycle, the valve 68 is closed and the valve 70 is fully opened. Now the adsorbent bed is pressurised or back-filled with the oxygen-rich waste gas. The adsorbent bed 44 continues to produce purified air and the pressure in the pressure vessel 48 continues to rise as a result of contuing flow of the purified air into it.

In order to end step 4 and initiate step 5 of the cycle, valves 66 and 70 are closed and valve 72 is opened. Now, the adsorbent bed 46 receives gas from the pressure vessel 48 so as to equalise the pressures therebetween. As a result, the adsorbent bed 46 is pressurised. Meanwhile, the bed 44 continues to produce purified air.

In order to bring step 5 to an end and to initiate step 6, the valve 72 is closed and the valve 54 is opened. As a result some of the product purified air which is still produced by the bed 44 is used to complete the repressurisation of the bed 46, that is to return it to its adsorption pressure. In addition, the pressure vessel 48 is isolated from the adsorbent beds 44 and 46.

In order to end step 6 and initiate step 7 of the cycle, valves 50 and 54 are closed and valves 52, 74 and 76 are opened. As a result, the adsorbent vessel 46 is now used to adsorb impurities from the feed air and to produce a product purified air which is sent to the manifold 40, the adsorbent bed 44 is taken off-line and desorbed gas is vented to the atmosphere via the vent line 64. In addition, part of the compressed and purified air is diverted through valve 76 to repressurise the pressure vessel 48.

In order to end step 7 and commence step 8 of the cycle, the valve 74 is closed and the valves 70 and 78 are opened. The bed 46 therefore continues to produce purified air while the pressure vessel 48 continues to be repressurised. The opening of the valve 70 now causes the oxygen-rich waste gas to purge remaining impurities such as carbon dioxide and water vapour from the adsorbent bed 44. These impurities are discharged through the vent line 64.

In order to bring step 8 to an end and to commence step 9 of the cycle, the valve 78 is closed and the valve 70 is fully opened. As a result, the bed 44 is now back-filled or repressurised with the oxygen-rich waste gas. The pressurisation of the pressure vessel 48 and the production of the purified air from the bed 46 continue.

In order to bring step 9 to an end and to start step 10, the valves 70 and 76 are closed and the valve 80 is opened. Now the pressures between the bed 44 and the vessel 48 are equalised with gas flowing from the vessel 48 to the bed 44. When this has been done the valve 80 is closed and the valve 54 is ramp opened to start step 1 again.

In a variant on the above-described purification process, the pressure vessel 48 could contain a bed of adsorbent and act as a third bed in the process. This bed could also be partially repressurised with part of the waste oxygen-rich gas stream.

The above-described operation can be controlled by a programmable device remotely controlling all of the valves (except the check-valves).

## Claims

1. A method of separating a nitrogen product and an oxygen-enriched "waste" gas from compressed, purified air in a liquid assist plant, wherein purification of the air is performed by pressure swing adsorption and the pressure swing adsorption cycle includes a step of repressurising a bed from which the impurities have been desorbed, characterised in that part of the repressurisation is performed with a stream of the oxygen-enriched "waste " gas.

2. A liquid assist plant for separating a nitrogen product and an oxygen-enriched "waste" gas from air, including a pressure swing adsorption purification unit, wherein said unit includes a repressurisation pipeline, characterised in that the repressurisation pipeline is able in operation to be opened to a flow of the oxygen-enriched "waste" gas.

3. A method according to claim 1, in which the plant is assisted by introduction into the rectification column of liquid nitrogen.

4. A method of separating nitrogen from air comprising:
compressing the air to form an air stream and removing heat of compression from said air stream;
purifying said air stream by removing impurities comprising carbon dioxide and moisture from said air stream to produce a compressed and purified air stream;
introducing said compressed and purified air stream into a distillation column configured to separate the air to produce the nitrogen and a waste stream enriched in oxygen; and
introducing refrigeration from an external liquid source;
the air stream being purified in a pre-purification unit having at least two adsorbent beds containing an adsorbent to adsorb said impurities, the pre-purification unit being operated by subjecting each of said adsorbent beds to adsorption to adsorb said impurities from said air stream, thereby to produce a pre-purification unit product stream, followed by regeneration to regenerate said adsorbent and to repressurise each of said adsorbent beds to an operational pressure of said pre-purification unit;
the compressed and purified air stream being formed from at least a part of the prepurification unit product stream; and
each of the said adsorbent beds being in part repressurised with said waste stream.

5. A method according to claim 4, wherein:
the pre-purification unit also has a pressure vessel; and
said regeneration of each of said beds is conducted in accordance with a cycle having depressurisation, purge, back-fill, pressure equalisation, and pressurisation stages;
the depressurisation stage being conducted by depressurising each of said two beds through an inlet section thereof, the purge stage being conducted by introducing said waste stream into an outlet region of said bed to drive preferentially adsorbed components from inlet sections thereof; the back-fill stage being conducted by introducing said waste stream into each of said beds so that each of said two beds partly pressurize; the pressure equalization steps being conducted by equalizing pressure of each of said beds with said pressure vessel and such that each of said beds further pressurise; and said pressurisation step being conducted by introducing a remaining part of said pre-purification unit product stream into each of said beds and such that each of said beds reach said operational pressure.

6. A method according to claim 5, wherein:
during said depressurisation, purge and back-fill stages said compressed and purified air stream is formed from part of said prepurification unit product stream and said remaining part of said prepurification unit product stream is introduced into said pressure vessel; and
during said pressure equalisation stage said compressed and purified air stream is formed from all of said pre-purification unit product stream.

7. A method according to any one of claims 3 to 6, wherein said refrigeration is added by introducing liquid nitrogen into said distillation column.
